# EUROPEAN PATENT APPLICATION

(11) **EP 2 285 103 A2**
(43) Date of publication of application: **16.02.2011**
(21) Application number: 10158309.4
(22) Date of filing: 30.03.2010
(51) Int. Cl.: H04N 5/64

(54) **Display Device**

(30) Priority: 11.08.2009 TW 098126998
(71) Applicant: AU Optronics Corporation, Hsin-Chu (TW)
(72) Inventor: SUNG, Li-Fu, Hsin-Chu (TW); LAI, Yu-Jen, Hsin-Chu (TW)
(74) Representative: Liedtke, Markus

(57) **Abstract**

A display device is provided. The display device includes a displayer and a stand. The displayer has a stand connecting part at the bottom of the displayer. The displayer has a back cover, wherein the back cover has a concave part. The stand is selectively and separably connected to the stand connecting part to support the displayer. When the stand is separated from the stand connecting part, the stand is selectively and partially contained in the concave part and is connected to the back cover.

## Description

### BACKGROUND OF THE INVENTION

### 1. Field of the Invention

This invention generally relates to a display device. More particularly, this invention relates to a slim display device.

### 2. Description of the Prior Art

Display devices are the most commonly used consumer products. Besides as a necessary output apparatus of the computer, display devices also serve as interfaces for outputting images when watching television programs or playing video games.

The display device usually stands on a desk, a cabinet, or a table by means of a stand. Conventionally, after stands are manufactured, the stands are independently transported from the manufacturing site to a system integration site to be assembled with the display device. In other words, besides the expenses on transporting housings of the display devices, an additional cost for transportation of the stands is also required. Moreover, the stands also occupy significant transportation spaces. Consequently, the transportation cost is significantly increased.

Furthermore, when an assembled display device is transported to a depot or a store for storage or sale, a space must be maintained to accommodate the stand, wherein the stand and the main body of the display device are individually packaged by plastic bags. Therefore, the package cost is increased. Moreover, when the display device is intended to be hanged on the wall, the stand must be detached and kept separately which is troublesome.

### SUMMARY OF THE INVENTION

It is an object of the present invention to provide a display device to decrease the space and the cost of transportation.

It is another object of the present invention to provide a display device to save the space for accommodating the stand.

The display device of the present invention includes a displayer and a stand. The displayer has a stand connecting part at the bottom of the displayer. The displayer further has a back cover, wherein a concave part is formed on the back cover. The stand is selectively and separably connected to the stand connecting part to support the displayer, wherein the stand is selectively and partially contained in the concave part and is connected to the back cover when the stand is separated from the stand connecting part.

The back cover has a back cover surface, wherein the back cover surface protrudes more outwardly than the outer face of the stand when the stand is contained in the concave part. The back cover includes an outer cover, wherein the outer cover covers on the concave part to form a side opening on one side of the outer cover, wherein the stand enters the concave part through the side opening and is at least partially covered by the outer cover. A guiding groove is formed on an inner wall of the concave part, wherein the stand slides into the concave part through the side opening along the guiding groove. The display device further includes a fixing component, wherein a hole is formed on the outer cover, and the fixing component fixes the stand on the back cover through the hole.

The stand has a connecting top face for connecting the stand connecting part. The connecting top face faces the bottom face of the concave part when the stand is contained in the concave part. A jointer is disposed on the connecting top face, wherein the jointer is corresponding to and separably connected to the stand connecting part. A groove is formed on the bottom face of the concave part, wherein the jointer is inserted into the groove when the stand is contained in the concave part. The jointer can be a tenon, wherein the tenon is separably engaged with the groove when the stand is contained in the concave part. Alternatively, a connector is formed on the bottom face of the concave part, wherein the jointer and the connector are corresponding to and separably connected to each other when the stand is contained in the concave part. The jointer can be a slot, and the connector is a tenon, wherein the tenon is separably engaged with the slot when the stand is contained in the concave part.

The displayer further includes a display module and a circuit module. The back cover covers the back surface of the display module. The circuit module is disposed between the back surface of the display module and the back cover. A bulge part is formed on the back cover, wherein the bulge part surrounds to form the concave part. The bulge part has a step height with respect to the concave part and forms an interior space together with the display module, wherein the circuit module is contained in the interior space and is located on the side near the concave part. The bulge part includes a first bulge part and a second bulge part respectively disposed on two sides of the concave part. The circuit module includes a first circuit module and a second circuit module, wherein the first circuit module is disposed in the interior space between the first bulge part and the display module, and the second circuit module is disposed in the interior space between the second bulge part and the display module.

### BRIEF DESCRIPTION OF THE DRAWINGS

FIG. 1A and FIG. 1B are a front view and a rear view of the present invention;

FIG. 2A is a schematic view of an embodiment of the present invention;

FIG. 2B, 3A, and 3B are schematic views of different embodiments of the present invention;

FIG. 4 is a schematic view of an embodiment showing the stand is contained in the concave part;

FIG. 5A to FIG. 5C are schematic views of an embodiment with an outer cover; and

FIG. 6A and FIG. 6B are schematic views of an embodiment showing a display module and a circuit module.

### DETAILED DESCRIPTION OF THE PREFERRED EMBODIMENT

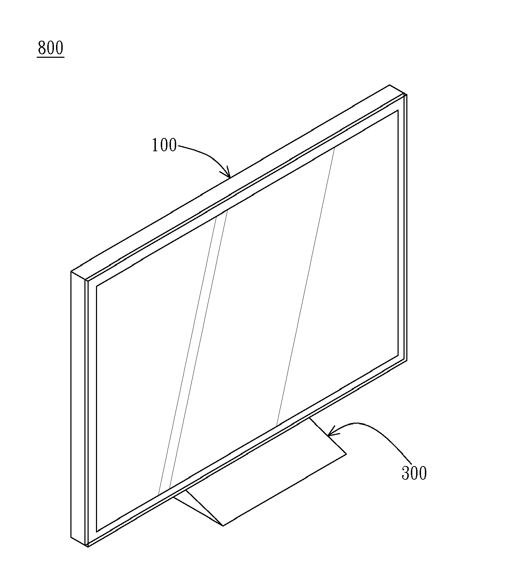

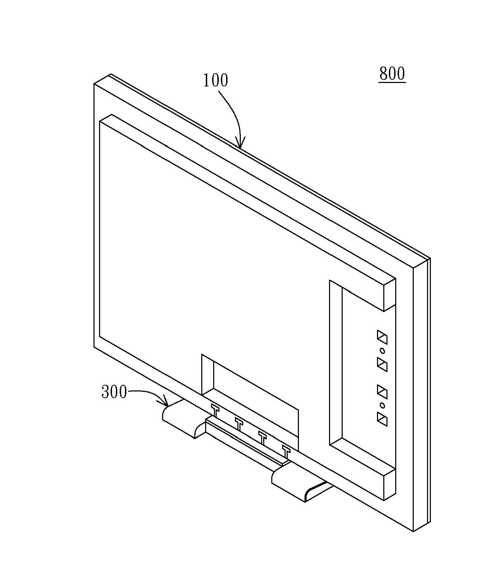

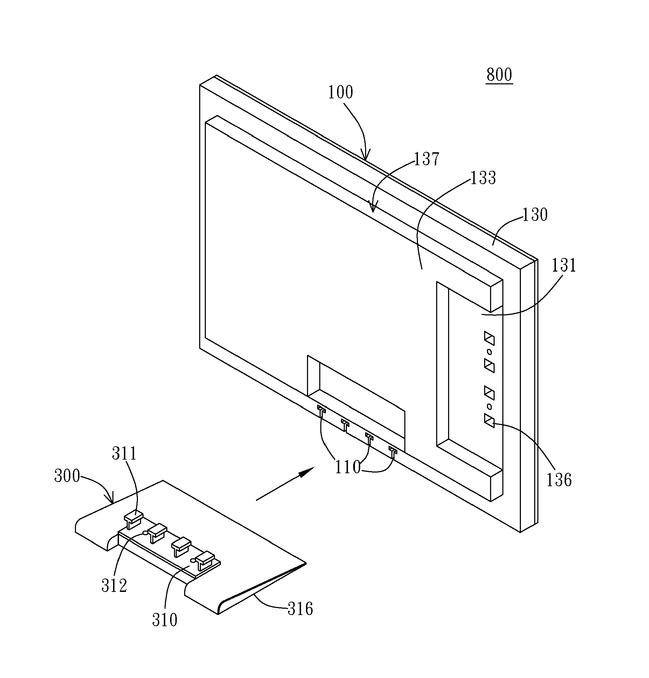

FIG. 1A and FIG. 1B are a front view and a rear view of a display device 800 of the present invention. The display device 800 includes a displayer 100 and a stand 300. More particularly, the display device is preferably a flat display device including a LCD display, a plasma display, etc. The displayer 100 is the main component of the display device 800. The stand 300 is configured to support the displayer 100 on a desk, a cabinet, or a table to allow users to view information displayed by the display device 800. In an embodiment shown in FIG. 2A, a stand connecting part 110 is disposed at the bottom of the displayer 100. In other words, as shown in FIG. 2A, the bottom of the displayer 100 has the stand connecting part 110 for connecting the stand 300 shown in FIG. 1B.

In the embodiment shown in FIG. 2A, the stand 300 has a connecting top face 310 for connecting the stand connecting part 110. In this embodiment, the connecting top face 310 is a flat piece disposed on the top of the stand 300. In other embodiments, however, the connecting top face 310 may be the top face of the stand 300. At least one jointer 311 is disposed on the connecting top face 310, wherein the jointer 311 is corresponding to and separably connected to the stand connecting part 110. More particularly, in this embodiment, the jointer 311 can be a tenon and the stand connecting part 100 can be a slot or mortise corresponding to the tenon. When the displayer 100 and the stand 300 are assembled, the tenon is separably engaged with the slot.

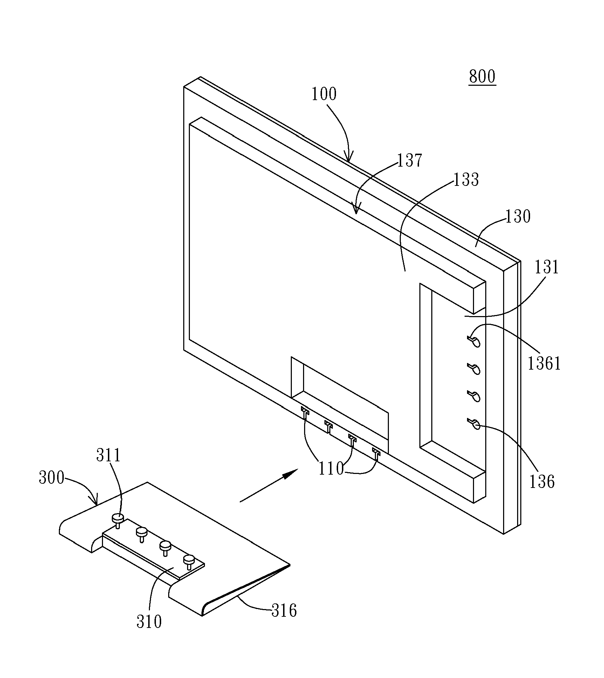

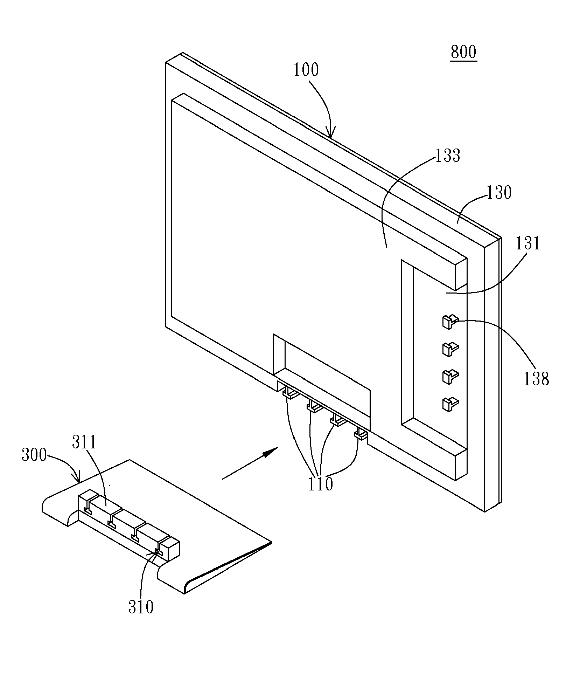

The jointer 311 and the stand connecting part 110 may have different arrangement according to design requirements. As a different embodiment shown in FIG. 3A, the jointers 311 are a plurality of round tenons, and the stand connecting part 110 are a plurality of slots corresponding to the round tenons. When the displayer 100 is connected to the stand 300, the round tenons are separably connected to the slots, which serve as the stand connecting part 110. As another different embodiment shown in FIG. 3B, the jointers 311 can be a plurality of slots, and the stand connecting part 110 accordingly includes a plurality of connectors corresponding to the slots. When the displayer 100 is connected to the stand 300, the slots are separably connected to the connectors. Moreover, in other embodiments, the displayer 100 can be connected to the stand 300 by screws, magnets, or strings.

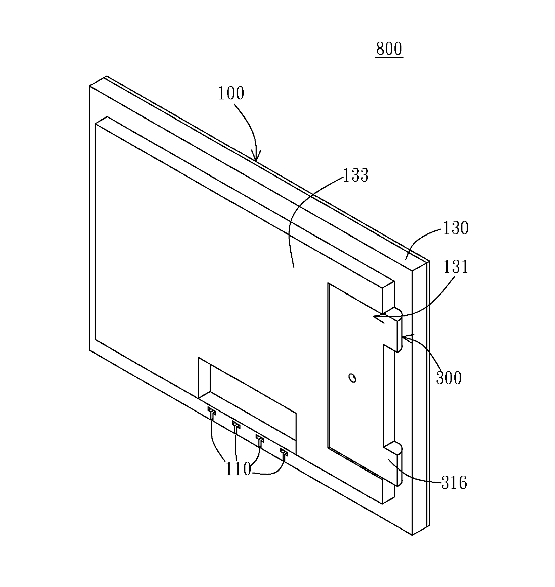

In the embodiment shown in FIG. 2A, the displayer 100 has a back cover 130, wherein a concave part 131 is formed on the back cover 130. In other words, a bulge part 137 is formed on the back cover 130, wherein the bulge part 137 surrounds to form the concave part 131. As mentioned above, the stand 300 is selectively and separably connected to the stand connecting part 100 to support the displayer 100. As shown in FIG. 4, when the stand 300 is separated from the stand connecting part 110, the stand 300 is selectively and partially contained in the concave part 131 and is connected to the back cover 130. In other words, due to such arrangement, the stand 300 can be conveniently contained in the concave part 131 of the back cover 130 of the displayer 100 eliminating the need of finding a suitable space for keeping the stand 300 separately. Therefore, the space and cost of transportation can be reduced. Furthermore, when the display device is hanged on the wall, to keep the disassembled stand is not troublesome, as shown in FIG. 4.

In the embodiment shown in FIG. 2A, the connecting top face 310 faces the bottom face of the concave part 131 when the stand 300 is contained in the concave part 131. That is, when the stand 300 is contained in the concave part 131, the bottom face 316 of the stand 300 of FIG. 2A is opposite to the bottom face of the concave part 131 and faces towards the same side as the back cover surface 133. When the stand 300 is contained in the concave part 131, the back cover surface 133 protrudes more outwardly than the outer face of the stand 300, i.e. the bottom face 316. In other words, in this embodiment, a step height between the concave part 131 and the back cover surface 133 can be increased to prevent the outer face of the stand 300 from protruding over the back cover surface 133 to benefit the transportation and the packaging of the display device.

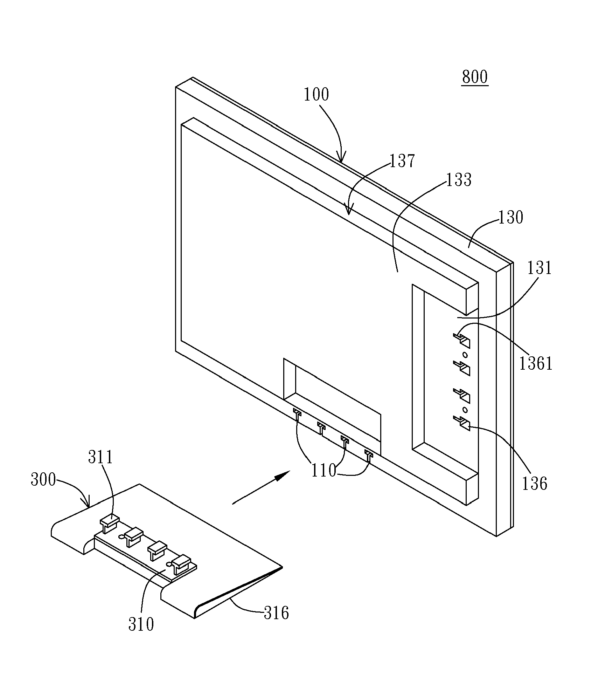

In one embodiment, at least one groove 136 is formed on the bottom face of the concave part 131. The jointer 311 is inserted into the groove 136 when the stand 300 is contained in the concave part 131. As shown in FIG. 2A, the groove 136 can be a square groove for accommodating the jointer 311. The stand 300 can be screwed to the concave part 131 through the screw hole 312. In different embodiments shown in FIG. 2B and FIG. 3A, the jointer 311 can be a tenon, which is separably engaged with the groove 136 when the stand 300 is contained in the concave part 131. More particularly, the groove 136 further includes a sub-groove 1361 for engaging with the stand 300 when the stand 300 is contained in the concave part 131 and further pushed inwardly to prevent the stand 300 from falling off. Alternatively, as shown in FIG. 3B, at least one connector 138 can be formed on the bottom face of the concave part 131. With respect to the slot type jointer 311, the connector 138 can be a tenson-like connector. The jointer 311 and the connector 138 are corresponding to and separably connected to each other when the stand 300 is contained in the concave part 131. In other words, the jointer 311 serves as the slot and the connector 138 serves as the tenon, wherein the slot 311 and the tenon 138 are corresponding to and separably connected to each other when the stand 300 is contained in the concave part 131.

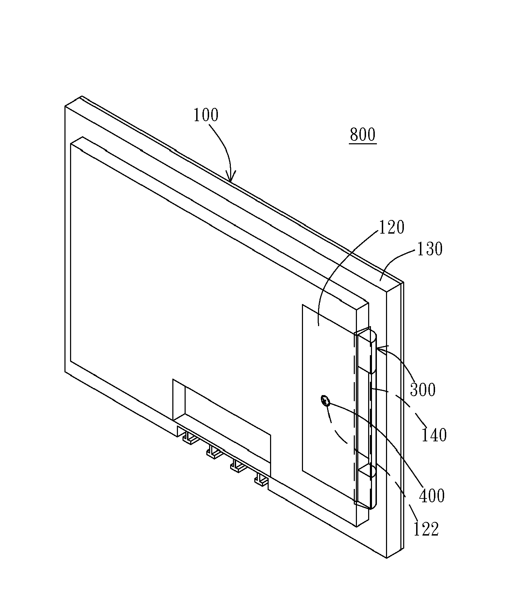

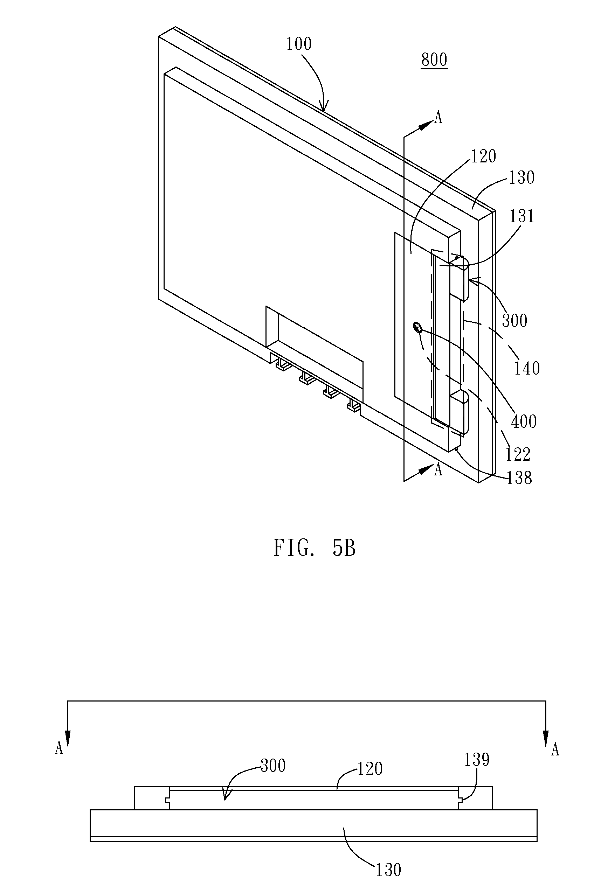

In the embodiment shown in FIG. 5A, the back cover 130 includes an outer cover 120. The outer cover 120 covers on the concave part 131 (see FIG. 2A), wherein the concave part 131 has a side opening 140 on one side of the outer cover 120. More particularly, the outer cover 120 can fully covers the concave part 131 as shown in FIG. 5A or partially covers the concave part 131 as shown in FIG. 5B. The stand 300 enters the concave part 131 through the side opening 140 and is at least partially covered by the outer cover 120. In other words, the outer cover 120 can be used to restrain the movement of the stand 300. As shown in FIG. 5C, a guiding groove 138 can be formed on an inner wall of the concave part 131, wherein the stand 300 slides into the concave part 131 through the side opening 140 along the guiding groove 139. The display device 800 further includes a fixing component 400, wherein a hole 122 is formed on the outer cover 120, and the fixing component 400 fixes the stand 300 on the back cover 130 through the hole 122. More particularly, the fixing component 400 can be a screw, which screws the stand 300 onto the back cover 130 through the hole 122.

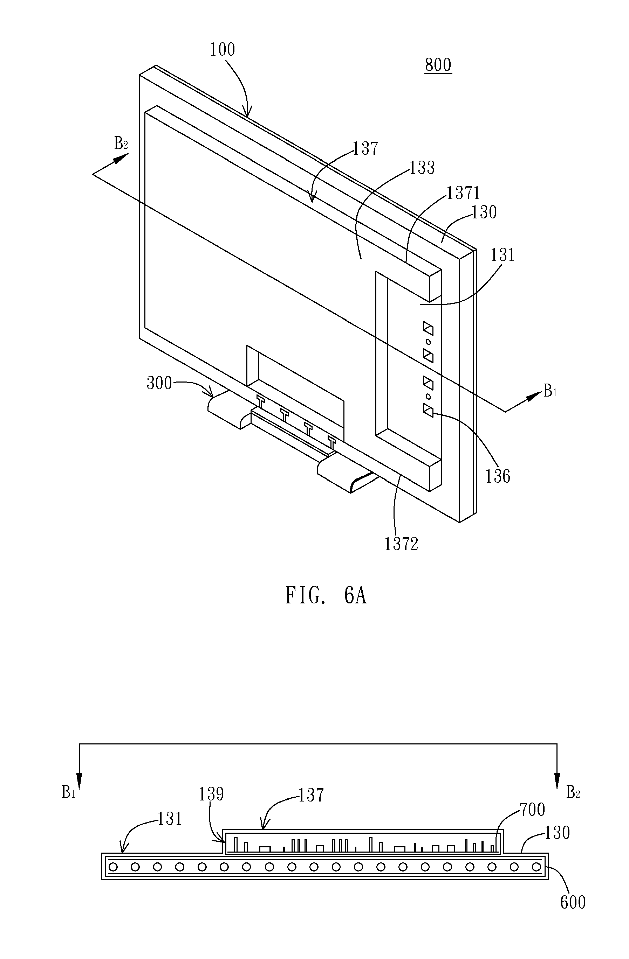

As shown in FIG. 6A and FIG. 6B, in this embodiment, the displayer 100 further includes a display module 600 and a circuit module 700. The back cover 130 covers the back surface of the display module 600. The circuit module 700 is disposed between the back surface of the display module 600 and the back cover 130. A bulge part 137 is formed on the back cover 130, wherein the bulge part 137 surrounds to form the concave part 131. The bulge part 137 has a step height with respect to the concave part 131 and forms an interior space 139 together with the display module 600, wherein the circuit module 700 is contained in the interior space 139 and is located on the side near the concave part 131. The bulge part 137 includes a first bulge part 1371 and a second bulge part 1372 respectively disposed on two sides of the concave part 131. The circuit module 700 includes a first circuit module and a second circuit module. The first circuit module 701 can be disposed in the interior space 139 between the first bulge part 1371 and the display module 600, and the second circuit module 702 can be disposed in the interior space 139 between the second bulge part 1372 and the display module 600. More particularly, the circuit module 700 can be disposed in the interior space 139 formed between the bulge part 137 and the display module 600 according to the design requirement for space-saving.

Although the preferred embodiments of the present invention have been described herein, the above description is merely illustrative. Further modification of the invention herein disclosed will occur to those skilled in the respective arts and all such modifications are deemed to be within the scope of the invention as defined by the appended claims.

## Claims

1. A display device, comprising:
- a displayer having a stand connecting part at a bottom of the displayer, wherein the displayer has a back cover, a concave part is formed on the back cover; and
- a stand selectively and separably connected to the stand connecting part to support the displayer, wherein the stand is selectively and partially contained in the concave part and is connected to the back cover when the stand is separated from the stand connecting part.

2. The display device of claim 1, wherein the back cover has a back cover surface, the back cover surface protrudes more outwardly than an outer face of the stand when the stand is contained in the concave part.

3. The display device of claim 1, wherein the back cover includes an outer cover, the outer cover covers on the concave part to form a side opening on one side of the outer cover, the stand enters the concave part through the side opening and is at least partially covered by the outer cover.

4. The display device of claim 3, wherein a guiding groove is formed on an inner wall of the concave part, the stand is configured to slide into the concave part through the side opening along the guiding groove.

5. The display device of claim 3, further comprising a fixing component, wherein a hole is formed on the outer cover, the fixing component is configured to fix the stand on the back cover through the hole.

6. The display device of claim 1, wherein the stand has a connecting top face for connecting the stand connecting part, the connecting top face faces a bottom face of the concave part when the stand is contained in the concave part.

7. The display device of claim 6, wherein a jointer is disposed on the connecting top face, the jointer is separably connected to the stand connecting part, a groove is formed on the bottom face of the concave part, the jointer is inserted into the groove when the stand is contained in the concave part.

8. The display device of claim 7, wherein the jointer is a tenon, the tenon is configured to separably engage with the groove when the stand is contained in the concave part.

9. The display device of claim 6, wherein a jointer is disposed on the connecting top face, the jointer is separably connected to the stand connecting part, a connector is formed on the bottom face of the concave part, the jointer and the connector are separably connected to each other when the stand is contained in the concave part.

10. The display device of claim 9, wherein the jointer is a slot, the connector is a tenon, the tenon is separably engaged with the slot when the stand is contained in the concave part.

11. The display device of claim 9, wherein the displayer further comprises:
- a display module, wherein the back cover covers a back surface of the display module; and
- a circuit module disposed between the back surface of the display module and the back cover, a bulge part is formed on the back cover, the bulge part surrounds to form the concave part, the bulge part has a step height with respect to the concave part and forms an interior space together with the display module, the circuit module is contained in the interior space and is located on the side near the concave part.

12. The display device of claim 11, wherein the bulge part includes a first bulge part and a second bulge part respectively disposed on two sides of the concave part, the circuit module includes a first circuit module and a second circuit module, wherein the first circuit module is disposed in the interior space between the first bulge part and the display module, the second circuit module is disposed in the interior space between the second bulge part and the display module.
